# EUROPEAN PATENT APPLICATION

(11) **EP 4 257 207 A1**
(43) Date of publication of application: **11.10.2023**
(21) Application number: 21900489.2
(22) Date of filing: 25.11.2021
(51) Int. Cl.: A62C 19/00, B31B 70/60, B32B 27/00, A62C 8/06

(54) **FIRE EXTINGUISHING BODY**

(30) Priority: 01.12.2020 JP 2020199762
(71) Applicant: TOPPAN INC., Tokyo 110-0016 (JP)
(72) Inventor: YAMAZAKI, Tsukasa, Tokyo 110-0016 (JP); TANABE, Junya, Tokyo 110-0016 (JP); SHODA, Ryo, Tokyo 110-0016 (JP); TODE, Ryohei, Tokyo 110-0016 (JP)
(74) Representative: Hoffmann Eitle
(86) International application number: PCT/JP2021/043256
(87) International publication number: WO 2022/118735

(57) **Abstract**

A fire extinguisher includes: a packaging pouch including at least one base sheet, the at least one base sheet including at least one resin film, the at least one resin film of the at least one base sheet being arranged to have corresponding edge portions joined to define a closed space within the packaging pouch; and a fire extinguishing agent disposed in the closed space.

## Description

### [Technical Field]

The present invention relates to fire extinguishers.

### [Background Art]

In recent years, as technology advances, our lives are becoming more comfortable; however, a large amount of energy is required to provide that comfort. In various situations such as high-density storage, transfer, and use of a large amount of energy, handling of energy requires a high level of safety.

In the case of automobiles, for example, there is a risk of ignition or fire during, for example, mining of fossil fuels, refining of gasoline from fossil fuels, transportation of gasoline, or combustion of gasoline in an engine. In the case of electronics, for example, there is also a risk of ignition or fire during, for example, transfer of electrical energy through electric wires, regulation of electrical energy at substations or transformers, use of electrical energy for household or factory electrical equipment, or temporary storage of electrical energy in a rechargeable battery.

For problems of ignition and fire, Patent Literature 1 proposes the use of a fire extinguishing fluid and a fire extinguisher. Patent Literature 2 proposes an automatic fire extinguishing apparatus to be released from a helicopter. Patent Literature 3 proposes an aerosol fire extinguishing system.

### [Citation List]

### [Patent Literature]

PTL 1: JP H09-276440 A
PTL 2: JP 2015-006302 A
PTL 3: JP 2017-080023 A

### [Summary of Invention]

### [Technical Problem]

Each of the above related arts proposes a method of dealing with a fire after the elapse of a certain amount of time. In order to minimize damage due to a fire, some type of fire extinguishing shortly after the occurrence of fire (initial fire extinguishing) is preferably performed.

To address this, for example, a component of a fire extinguishing agent itself disclosed in the above related arts may be disposed in advance on or near a target object that may catch fire. With this method, a fire occurring from a target object is expected to be extinguished by the component of the fire extinguishing agent before a person detects the fire. However, the fire extinguishing agent disposed in an open space deteriorates with time, and this problem needs to be addressed. Moreover, it is obviously not practical to merely spray a fire extinguishing agent near a target object, and the fire extinguishing agent needs to be disposed on or near the target object in a form that provides suitable handleability.

The present invention has been made in view of the above circumstances; an object of the present invention is to provide a fire extinguisher that has good handleability, provides good stability to properties of a fire extinguishing agent therein, and can prevent the occurrence and spread of fire.

### [Solution to Problem]

An aspect of the present invention provides a fire extinguisher including a packaging pouch including at least one base sheet, the at least one base sheet including at least one resin film, the at least one resin film of the at least one base sheet being arranged to have corresponding edge portions joined to define a closed space within the packaging pouch; and a fire extinguishing agent disposed in the closed space. With such a fire extinguisher, the packaging pouch ensures good handleability thereof. In addition, deterioration of the fire extinguishing agent is suppressed because the at least one base sheet including at least one resin film suppresses contact between the fire extinguishing agent and external air. Thus, the above fire extinguisher has good handleability and provides good stability to properties of the fire extinguishing agent. Moreover, provision of the fire extinguisher on or near a target object in advance enables initial fire extinguishing, which suppresses spread of fire to its surroundings.

In another aspect, the at least one resin film may include a polyolefin-based resin.

In another aspect, the at least one base sheet may have a thickness of 4.5 to 1000 µm.

In another aspect, the at least one base sheet may further include a water vapor barrier layer.

In another aspect, the water vapor barrier layer may have a water vapor transmission rate of 10 g/m²/day or less, as measured according to JIS K 7129 at 40°C and 90% RH.

### [Advantageous Effects of Invention]

The present invention provides a fire extinguisher that has good handleability, lends good stability to properties of a fire extinguishing agent therein, and can prevent the occurrence and spread of fire. The following provides a brief summary of the advantages of the present invention.
- The present invention minimizes damage due to the spread of fire, that is, enables initial fire extinguishing.
- The present invention eliminates the need for firefighting in which a person having noticed a fire brings a fire extinguisher to a position near a fire extinguishing target and extinguishes the fire.
- Because of easier installation than equipment such as automatic fire extinguishing systems, the present invention is less limited by the installation location and can be adapted to a desired location.
- The present invention reduces the frequency of replacement of the fire extinguisher because it provides good stability to properties of a fire extinguishing agent therein.

### [Brief Description of Drawings]

Fig. 1 is a schematic external view of a fire extinguisher according to an embodiment.
Fig. 2 is a schematic cross-sectional view of the fire extinguisher according to the embodiment, taken along line II-II in Fig. 1.
Fig. 3 is a schematic cross-sectional view of a fire extinguisher according to another embodiment.
Fig. 4 is a schematic external view of a fire extinguisher according to another embodiment.
Fig. 5 is a schematic diagram illustrating a method for producing a fire extinguisher according to an embodiment.
Fig. 6 is a schematic diagram illustrating a method for producing a fire extinguisher according to another embodiment.
Fig. 7 is a schematic cross-sectional view of a fire extinguisher according to another embodiment.

### [Description of Embodiments]

Embodiments of the present invention will be described in detail below. The present invention is not limited to the following embodiments.

### <Fire extinguisher>

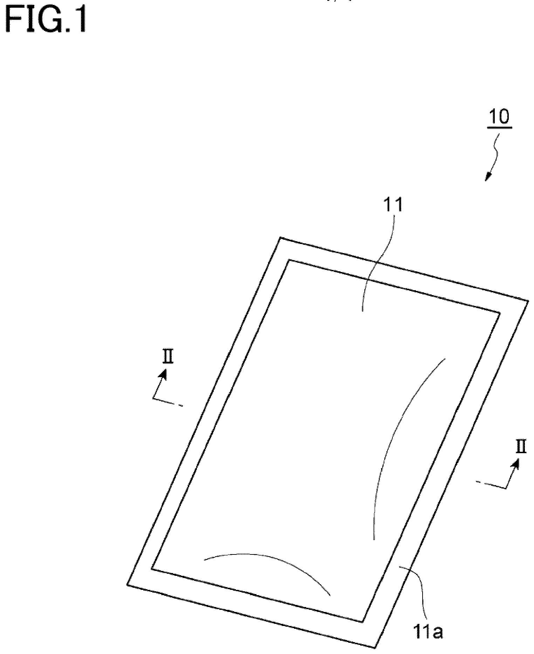

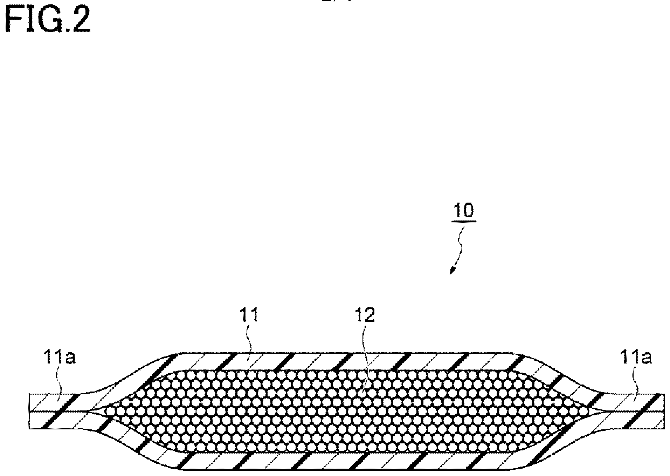

Fig. 1 is a schematic external view of a fire extinguisher according to an embodiment. Fig. 2 is a schematic cross-sectional view of the fire extinguisher according to the embodiment, taken along line II-II in Fig. 1. A fire extinguisher 10 includes a packaging pouch 11 and a fire extinguishing agent 12 enclosed therein. The packaging pouch 11 is formed of base sheets each including a resin film. The packaging pouch 11 includes a sealed portion 11a at its periphery; the base sheets are bonded to each other in the sealed portion 11a.

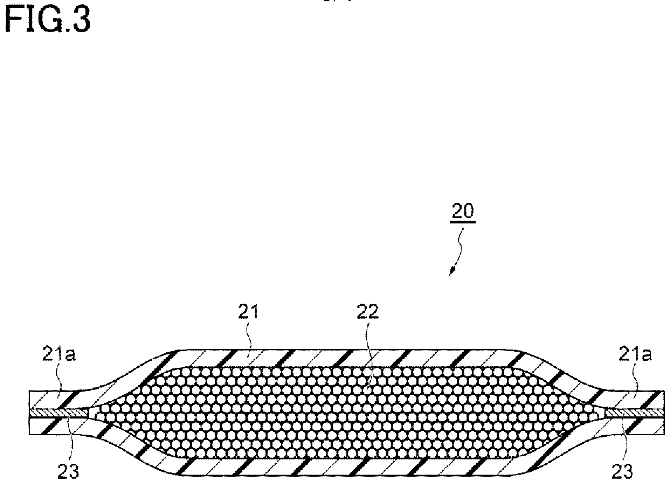

Fig. 3 is a schematic cross-sectional view of a fire extinguisher according to another embodiment. A fire extinguisher 20 includes a packaging pouch 21 and a fire extinguishing agent 22 enclosed therein. The packaging pouch 21 is formed of base sheets each including a resin film. The packaging pouch 21 includes a sealed portion 21a at its periphery; the base sheets are bonded to each other in the sealed portion 21a with an adhesive 23.

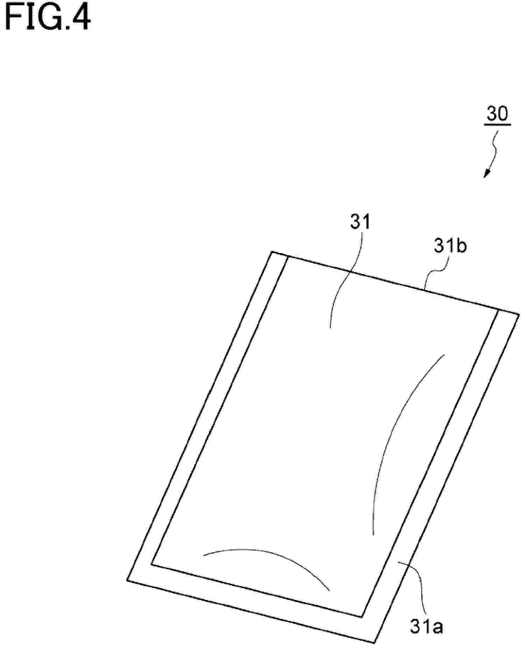

Fig. 4 is a schematic external view of a fire extinguisher according to another embodiment. A fire extinguisher 30 includes a packaging pouch 31 and a fire extinguishing agent (not shown) enclosed therein. The packaging pouch 31 is formed of a base sheet including a resin film. The packaging pouch 31 includes a sealed portion 31a and a folded section 31b at its periphery; the base sheets are bonded to each other in the sealed portion 31a. The folded section 31b is formed by preparing a single base sheet instead of a pair of base sheets and folding the single base sheet. The form of the sealed portion 31a may be according to the sealed portion 11a or the sealed portion 21a.

When the fire extinguisher is seen perpendicularly from above, the width of the sealed portion 11a may be, but is not particularly limited to, for example, 2 to 40 mm, in view of providing stability to properties of the fire extinguishing agent.

While the thickness of a central portion of the fire extinguisher is not necessarily limited because it varies depending on its layer configuration or the amount of fire extinguishing agent enclosed therein, the thickness thereof can be, for example, 0.2 to 20 mm, and more preferably 2 to 20 mm, in order to make the fire extinguisher thinner to avoid limitations on a space therefor while maintaining fire extinguishing performance. Moreover, the area of a major surface of the fire extinguisher (surface viewed when the fire extinguisher is seen perpendicularly from above) can be, for example, 9 to 620 cm² in terms of fire extinguishing performance and ease in handling.

The fire extinguisher is provided on or near a target object that may catch fire. In case the target object catches fire, initial fire extinguishing is performed by the fire extinguisher.

### [Base sheet]

A base sheet includes a resin film. Examples of a material of the resin film include polyolefins (e.g., PE, PP, and COP), polyesters (e.g., PET), fluoropolymers (e.g., PTFE, ETFE, EFEP, PFA, FEP, and PCTFE), vinyl resins (e.g., PVC and PVA), acrylic resins, epoxy resins, polyamides, polyimides, and the like. The base sheet may include one or more resin films composed of these materials. When the base sheet includes a plurality of resin films, these films may be composed of different materials. Further, these layers may be bonded to each other with an adhesive (adhesive layer). Examples of the adhesive include acrylic adhesives, epoxy adhesives, silicone adhesives, polyolefin adhesives, urethane adhesives, polyvinyl ether adhesives, and synthetic adhesives composed of these.

The resin film may have thermal melting properties (thermal sealability). A resin film having thermal melting properties can be referred to as a thermal melting film. The thermal melting film can be provided on the inner side (facing the fire extinguishing agent) of the base sheet. When the base sheet includes a thermal melting film, a sealed portion of a packaging pouch can be referred to as a heat-sealed portion. Examples of resins having thermal melting properties include polyolefin-based resins. That is, the resin film may include a polyolefin-based resin. Examples of polyolefin-based resins include polyolefin-based resins such as low-density polyethylene (LDPE), linear low-density polyethylene (LLDPE), medium-density polyethylene (MDPE), and cast polypropylene (CPP); polyethylene-based resins such as an ethylene-vinyl acetate copolymer and an ethylene-α-olefin copolymer; and polypropylene-based resins such as a propylene-ethylene random copolymer, a propylene-ethylene block copolymer, and a propylene-α-olefin copolymer. Among them, in terms of good thermal sealability and a low water vapor transmission rate that easily suppresses deterioration of the fire extinguishing agent, the polyolefin-based resin may include low-density polyethylene (LDPE), linear low-density polyethylene (LLDPE), or cast polypropylene (CPP). These resins have transparency that facilitates visual examination of the fire extinguishing agent. Accordingly, for example, the time to replace the fire extinguisher can be easily determined.

The base sheet may include a water vapor barrier layer. The water vapor barrier layer may be provided on the outer side of the base sheet, and may be provided as an intermediate layer of the base sheet. When the base sheet includes a water vapor barrier layer, regardless of the location of the fire extinguisher or the use environment thereof, it is easier to maintain water vapor barrier properties sufficient to prevent a significant change in properties of the fire extinguishing agent. The water vapor transmission rate of the water vapor barrier layer (as measured according to JIS K 7129 at 40°C and 90% RH) can be determined according to the type of the fire extinguishing agent and thus is not particularly limited, but it can be 10 g/m²/day or less, and more preferably 1 g/m²/day or less. In terms of adjustment of water vapor transmission rate, the water vapor barrier layer may be a metal foil, such as aluminum foil, or a polyester resin layer (e.g., a PET layer) including a metal oxide-deposited layer, such as an alumina-deposited layer or a silica-deposited layer. When the water vapor barrier layer includes a metal-oxide deposited layer, the metal-oxide deposited layer may be arranged to face toward the fire extinguishing agent.

The base sheet may include a fire extinguishing agent-supporting layer for supporting the fire extinguishing agent. Formation of the fire extinguishing agent on the fire extinguishing agent-supporting layer in advance facilitates handling of the fire extinguishing agent. The fire extinguishing agent-supporting layer may be a polyester resin layer (e.g., a PET layer).

The thickness of the base sheet may be selected as appropriate according to the use environment of the fire extinguisher, an allowed space, and the like. A thick base sheet, for example, easily suppresses water vapor transmission, can easily have high strength or rigidity and be highly flat, and facilitates handling. A thin base sheet allows provision of a fire extinguisher in a limited space. The thickness of the base sheet can be, for example, 4.5 to 1000 µm, more preferably 12 to 100 µm, and even more preferably 12 to 50 µm. The thicknesses of the resin film and the water vapor barrier layer may be adjusted as appropriate according to the thickness of the base sheet. The thickness of the resin film (in the case of the base sheet including a plurality of resin layers, a total thickness of the resin layers) can be, for example, 25 to 150 µm, and more preferably 30 to 100 µm. The thickness of the water vapor barrier layer can be, for example, 4.5 to 25 µm, and more preferably 7 to 12 µm.

### [Fire extinguishing agent]

The fire extinguishing agent is not particularly limited, and a material having at least one of the so-called four elements of fire extinguishing (starving action, cooling action, smothering action, and negative catalysis action) can be used as appropriate according to the form of a target object. Examples of the fire extinguishing agent include sand (standard sand) and others, in addition to general fire extinguishing agents (e.g., fire extinguishing powder materials containing potassium salts as the main component, and typical fire-extinguishing powder materials, such as sodium hydrogen carbonate and phosphate). Examples of versatile fire extinguishing agents include ABC fire extinguishing agents, and examples of fire extinguishing agents for oil and electrical fires include BC fire extinguishing agents. When the target object is a lithium-ion battery, a BC fire extinguishing agent, or some other fire extinguishing agent for lithium-ion batteries is used.

The amount of fire extinguishing agent can be selected as appropriate according to the form of a target object, the fire intensity when fire occurs, the amount of time required for fire extinguishing, an allowed space, and the like. A larger amount of fire extinguishing agent provides more enhanced fire extinguishing performance, resulting in a shorter time required for fire extinguishing; however, the bulk may be increased, which limits the location where the fire extinguisher can be provided. The amount of fire extinguishing agent can be, for example, 0.4 to 3.9 g/cm², and more preferably 1.0 to 2.5 g/cm².

The fire extinguishing agent may be mixed with a binder. That is, the fire extinguishing agent may be a composition containing a fire extinguishing agent (fire extinguishing component) and a binder. The content of the fire extinguishing agent in the composition (fire extinguishing agent composition) can be 70 to 97 mass% relative to the total amount of the fire extinguishing agent composition.

As the binder resin, a thermoplastic resin and a thermosetting resin can be used. Examples of thermoplastic resins include polyolefin resins such as polypropylene resins, polyethylene resins, poly(1-)butene resins, and polypentene resins, polystyrene resins, acrylonitrile-butadiene-styrene resins, methyl methacrylate-butadiene-styrene resins, ethylene-vinyl acetate resins, ethylene-propylene resins, polycarbonate resins, polyphenylene ether resins, acrylic resins, polyamide resins, polyvinyl chloride resins, polyvinyl alcohol, polyvinyl acetal, polyvinyl butyral, and the like. Examples of thermosetting resins include rubbers such as natural rubber (NR), isoprene rubber (IR), butadiene rubber (BR), 1,2-polybutadiene rubber (1,2-BR), styrene-butadiene rubber (SBR), chloroprene rubber (CR), nitrile rubber (NBR), butyl rubber (IIR), ethylene-propylene rubber (EPR, EPDM), chlorosulfonated polyethylene (CSM), acrylic rubber (ACM, ANM), epichlorohydrin rubber (CO, ECO), polysulfide rubber (T), silicone rubber (Q), fluororubber (FKM, FZ), and urethane rubber (U), polyurethane resins, polyisocyanate resins, polyisocyanurate resins, phenol resins, epoxy resins, and the like. The binder resin may contain a curing agent component.

### [Adhesive]

Examples of the adhesive include acrylic adhesives, epoxy adhesives, silicone adhesives, polyolefin adhesives, urethane adhesives, polyvinyl ether adhesives, and synthetic adhesives composed of these. Among them, in order to simultaneously achieve low cost and adhesion with a base sheet at a high temperature of 85°C and a high humidity of 85% RH, an epoxy-urethane synthetic adhesive can be suitably used as an adhesive.

Use of an adhesive allows bonding the periphery of a base sheet even when the resin film does not have thermal melting properties. When the periphery of a base sheet is bonded with an adhesive, the sealed portion at the periphery of a packaging pouch can be referred to as an adhered portion.

Although an adhesive is used only at the sealed portion in Fig. 3, it may be used for the entire inner surface of the base sheet, as long as the adhesive does not affect provision of stability to properties of the fire extinguishing agent.

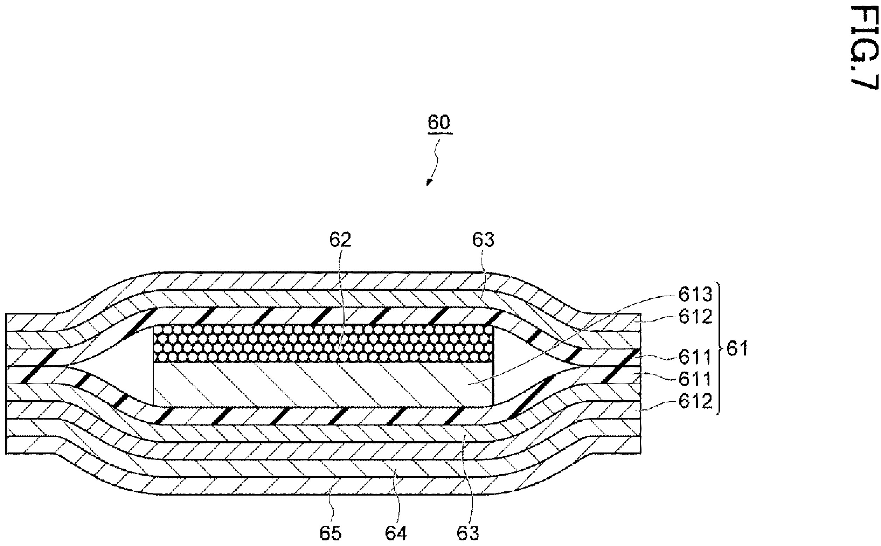

Fig. 7 is a schematic cross-sectional view of a fire extinguisher according to another embodiment. A fire extinguisher 60 includes a packaging pouch 61 formed of at least one base sheet; a fire extinguishing agent 62 enclosed in the packaging pouch; and a pressure-sensitive adhesive layer 64 (or an adhesive layer) and a release film 65 both disposed on one side of the packaging pouch. The at least one base sheet includes a resin layer 611 as an inner layer, a water vapor barrier layer 612 as an outer layer, and a fire extinguishing agent-supporting layer 613 for supporting the fire extinguishing agent. The resin layer 611 and the water vapor barrier layer 612 are laminated via an adhesive layer 63. Although Fig. 7 shows the fire extinguishing agent formed as a layer on the fire extinguishing agent-supporting layer, the fire extinguishing agent may be contained alone in a resin layer without use of the fire extinguishing agent-supporting layer (e.g., in powder form). In the present embodiment, since the pressure-sensitive adhesive layer 64 is provided on one side of the packaging pouch, the fire extinguisher can be even more easily disposed at a location where there is a risk of fire occurrence. Moreover, the release film 65 is provided so as to cover the pressure-sensitive layer 64. The release film 65 may be formed of resin or paper because it is removed when the fire extinguisher is attached to a desired location.

The fire extinguisher may further include a design layer. The design layer may be formed by printing. Specific examples of designs include white or gray solid patterns, such as wood grain patterns or tile patterns designed with living space in mind; and patterns of pictures, figures, designs, and characters. Provision of a design layer achieves effects of, for example, increasing the designability, harmonizing the fire extinguisher with the surrounding environment, and enhancing the strength of the fire extinguisher. In the case of the form shown in Fig. 7, for example, the design layer may be provided on the opposite side of the packaging pouch to the pressure-sensitive adhesive layer side (the side on which attachment of the fire extinguisher will be performed). When one or more layers constituting the base sheet are transparent, the design layer may be provided inside the base sheet; in the case of the form shown in Fig. 7, for example, the design layer may be provided on the inner side of the water vapor barrier layer. The design layer may have a single-layer structure or a multilayered structure.

### [Fire extinguishing target object]

The fire extinguishing target object is not particularly limited, as long as it may catch fire. Examples of objects that may catch fire include components, such as electric wires; electric switchboards; distribution boards; control boards; storage batteries (e.g., lithium-ion batteries); wallpaper for building materials; building materials, such as ceiling materials; lithium-ion battery collection boxes (recycling boxes); trash cans; automobile-related parts; electrical outlets; outlet covers; and others.

### <Method for producing fire extinguisher>

Although a fire extinguisher can be produced, for example, using the methods below, these are not intended to be limiting.

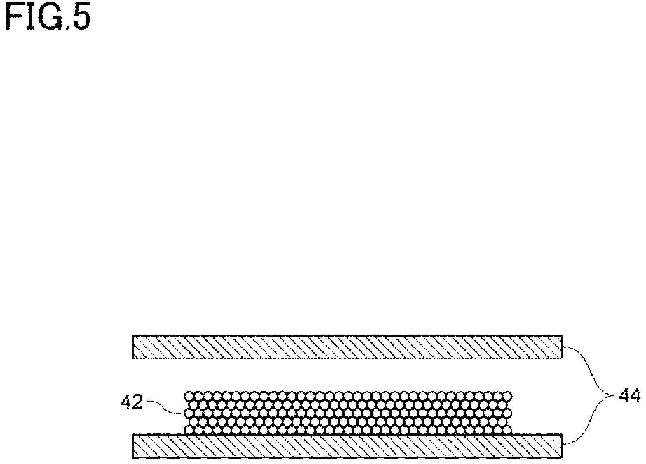

Fig. 5 is a schematic diagram illustrating a method for producing a fire extinguisher according to an embodiment. As shown in Fig. 5, a fire extinguishing agent 42 is provided between a pair of base sheets 44, and the peripheries of the base sheets 44 are joined to be sealed by heat sealing or with an adhesive, to thereby obtain a fire extinguisher.

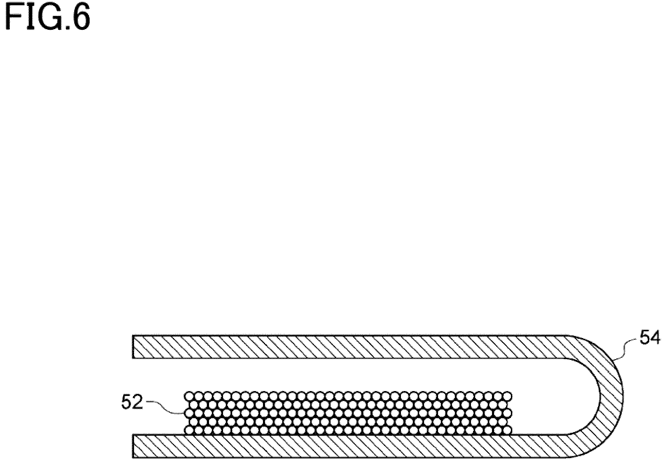

Fig. 6 is a schematic diagram illustrating a method for producing a fire extinguisher according to another embodiment. As shown in Fig. 6, after a single base sheet 54 is folded, a fire extinguishing agent 52 is provided between portions of the base sheet 54 that face each other, followed by joining and thus sealing the edges of the base sheet 54 except the folded section through heat sealing or with an adhesive, to thereby obtain a fire extinguisher.

Alternatively, a fire extinguisher can be obtained by joining corresponding edges of a pair of base sheets by heat sealing or with an adhesive while leaving them open at one edge; disposing a fire extinguishing agent in the resulting object through the opening; and joining and thus sealing the opening edges by heat sealing or with an adhesive.

Alternatively, a fire extinguisher can be obtained by folding a single base sheet; joining corresponding edges of portions of the base sheet facing each other by heating sealing or with an adhesive while leaving it open at one edge; disposing a fire extinguishing agent in the resulting object through the opening; and joining and thus sealing the opening edges by heat sealing or with an adhesive.

When a fire extinguishing agent composition containing a fire extinguishing agent and a binder is used as a fire extinguishing agent, for example, a coating solution containing the fire extinguishing agent composition may be applied to a portion of at least one base sheet (to a resin layer or a fire extinguishing agent-supporting layer) to form a layer of fire extinguishing agent, and this may be used to provide a fire extinguishing agent between portions of the at least one base sheet that face each other. Alternatively, a resin into which a fire extinguishing agent has been kneaded may be disposed on a base sheet to thereby provide a fire extinguishing agent between base sheets. A fire extinguishing agent (fire extinguishing agent-containing layer) may be a layer of a composition containing a fire extinguishing agent and a binder, or may be a resin layer containing a fire extinguishing agent.

### [Examples]

Although the present invention will be described in greater detail by way of the following examples, these examples are not intended to limit the present invention.

### <Production of fire extinguisher>

### [Example 1]

Epoxy-urethane synthetic adhesives AD-393 and CAT-EP5 manufactured by Toyo Ink Co., Ltd. and IPA as a diluent solvent were prepared; these were mixed at a ratio of 15: 1:25.7; and the mixture was stirred for one minute to thereby obtain a dry lamination adhesive having a solid content of 20 mass%.

SC-30 (thickness: 30 µm) as CPP manufactured by Mitsui Chemicals Tohcello, Inc. and GL-ARH (thickness: 12 µm) as alumina-deposited PET manufactured by Toppan Inc. were prepared; the size of each material was 210 mm × 297 mm.

The deposited layer side of the GL-ARH was coated with the dry lamination adhesive by bar coating using a wire bar #14, and the coated laminate was dried in an oven at 80°C for 30 seconds to thereby obtain an adhesive layer (ADH) having a dry coating weight of 2 g/m².

A corona-treated surface of the SC-30 was bonded to the adhesive layer at a lamination temperature of 60°C and a pressure of 0.5 MPa using a benchtop laminator FA-570 manufactured by Taisei Laminator Co., LTD., to thereby obtain a laminated film.

Two samples 80 mm square were cut from the laminated film, and they were disposed in a heat sealer TP-701-B manufactured by TESTER SANGYO CO., LTD. such that the SC-30 surfaces of the samples faced each other. Then, three corresponding edges of the cut laminated film portions were heat sealed at 150°C and 0.5 MPa for 10 seconds using a seal bar having a width of 1 cm and a length of 30 cm, to thereby obtain a laminated film bag.

Subsequently, 32.5 g of ABC fire extinguishing agent manufactured by MORITA MIYATA CORPORATION was measured and filled in the laminated film bag.

The opening edges were then heat sealed under the same conditions as above using the above heat sealer, to thereby obtain a fire extinguisher.

### [Example 2]

A laminated film was produced using the same procedure as in Example 1, except that MC-S #60 (thickness: 60 µm) as LLDPE manufactured by Mitsui Chemicals Tohcello, Inc. was prepared instead of CPP in Example 1, and that GL-RD (thickness: 12 µm) as silica-deposited PET manufactured by Toppan Inc. was prepared instead of alumina-deposited PET. A fire extinguisher was produced as in Example 1, except for using the laminated film thus produced.

### [Example 3]

A laminated film composed of three layers was obtained by preparing SC-30 (thickness: 50 µm) as CPP manufactured by Mitsui Chemicals Tohcello, Inc., 8021 (thickness: 7 µm) as an aluminum foil manufactured by Toyo Aluminum K.K., and S10 (thickness: 12 µm) as PET manufactured by Toray Industries, Inc. such that the size of each material was 210 mm × 297 mm; and laminating these layers with a dry lamination adhesive using the same procedure as in Example 1. A fire extinguisher was produced as in Example 1, except for using the laminated film thus produced.

### [Example 4]

A laminated film was produced as in Example 1. A single rectangular sample having a size of 80 mm × 160 mm was cut from this laminated film, and was folded in half with the SC-30 on the inside so as to have the opposite short sides aligned. This sample was then disposed in a heat sealer TP-701-B manufactured by TESTER SANGYO CO., LTD., and two corresponding edges of the cut laminated film except for the short sides were heat sealed at 150°C and 0.5 MPa for 10 seconds using a seal bar having a width of 1 cm and a length of 30 cm, to thereby obtain a laminated film bag.

Subsequently, 32.5 g of ABC fire extinguishing agent manufactured by MORITA MIYATA CORPORATION was measured and filled in the laminated film bag.

The opening edges were then heat sealed under the same conditions as above using the above heat sealer, to thereby obtain a fire extinguisher.

### [Example 5]

A laminated film was produced as in Example 2. A fire extinguisher was produced as in Example 4, except for using the laminated film thus produced.

### [Example 6]

A laminated film was produced as in Example 3. A fire extinguisher was produced as in Example 4, except for using the laminated film thus produced.

The fire extinguishers obtained in the respective examples had good handleability; and they provided good stability to properties of respective fire extinguishing agents therein because their fire extinguishing agents were filled in the respective packaging pouchs. Provision of such a fire extinguisher on or near a target object in advance can prevent the occurrence and spread of fire due to the object catching fire.

The evaluations below were performed on the fire extinguishers of the respective examples. The results are shown in Table 1.

### <Water vapor transmission rate of water vapor barrier layer>

The water vapor transmission rate of water vapor barrier layers was measured. The measurement was performed according to a JIS K 7129 B MOCON method at 40°C and 90% RH.

### <Change in appearance of fire extinguishing agent>

The fire extinguishers were allowed to stand for seven days at 40°C and 90% RH. Subsequently, it was checked whether there was a change in the appearance of the fire extinguishing agents (e.g., discoloration, swelling).

**[Table 1]**

| | Water vapor barrier layer | Resin layer (thermal melting layer) | Layer configuration (figure in parentheses indicates thickness (µm)) | Evaluation | |
|---|---|---|---|---|---|
| | | | | Water vapor transmission rate (g/m²/day) | Appearance change |
| Ex.1 | AlOₓ-deposited PET | CPP | AlOₓ-deposited PET (12)/ADH (2)/CPP (30) | < 10 | None |
| Ex.2 | SiO-deposited PET | LLDPE | SiO-deposited PET (12)/ADH (2)/LLDPE (60) | < 1 | None |
| Ex.3 | Al foil | CPP | PET (12)/ADH (2)/Al foil (7)/ADH (2)/CPP (50) | < 1×10⁻² | None |
| Ex.4 | AlOₓ-deposited PET | CPP | AlOₓ-deposited PET (12)/ADH (2)/CPP (30) | < 10 | None |
| Ex.5 | SiO-deposited PET | LLDPE | SiO-deposited PET (12)/ADH (2)/LLDPE (60) | < 1 | None |
| Ex.6 | Al foil | CPP | PET (12)/ADH (2)/Al foil (7)/ADH (2)/CPP (50) | < 1×10⁻² | None |

### [Industrial Applicability]

Fire extinguishers of the present invention can be used particularly for industrial materials such as building materials, automobile parts, aircraft parts, and electronics parts.

### [Reference Signs List]

10, 20, 30, 60 ... Fire extinguisher
11, 21, 31, 61 ... Packaging pouch
12, 22, 42, 52, 62 ... Fire extinguishing agent
23 ... Adhesive
11a, 21a, 31a ... Sealed portion
31b ... Folded section
44, 54 ... Base sheet
63 ... Adhesive layer
64 ... Pressure-sensitive adhesive layer (adhesive layer)
65 ... Release film
611 ... Resin layer
612 ... Water vapor barrier layer
613 ... Fire extinguishing agent-supporting layer

## Claims

1. A fire extinguisher comprising:
a packaging pouch comprising at least one base sheet, the at least one base sheet including at least one resin film, the at least one resin film of the at least one base sheet being arranged to have corresponding edge portions joined to define a closed space within the packaging pouch; and
a fire extinguishing agent disposed in the closed space.

2. The fire extinguisher according to claim 1, wherein:
the at least one resin film includes a polyolefin-based resin.

3. The fire extinguisher according to claim 1 or 2, wherein:
the at least one base sheet has a thickness of 4.5 to 1000 µm.

4. The fire extinguisher according to any one of claims 1 to 3, wherein:
the at least one base sheet further includes a water vapor barrier layer.

5. The fire extinguisher according to claim 4, wherein:
the water vapor barrier layer has a water vapor transmission rate of 10 g/m²/day or less, as measured according to JIS K 7129 at 40°C and 90% RH.
